# EUROPEAN PATENT SPECIFICATION

(11) **EP 2 723 998 B1**
(45) Date of publication and mention of the grant of the patent: **14.10.2015**
(21) Application number: 12720419.6
(22) Date of filing: 05.05.2012
(51) Int. Cl.: F01N 3/20

(54) **UREA RESERVOIR FOR A MOTOR VEHICLE**
HARNSTOFFTANK FÜR EIN KRAFTFAHRZEUG
RÉSERVOIR D'URÉE POUR VÉHICULE MOTORISÉ

(30) Priority: 27.06.2011 DE 102011105893
(43) Date of publication of application: 30.04.2014
(73) Proprietor: Kautex Textron GmbH & Co. KG, 53229 Bonn (DE)
(72) Inventor: EBERHARDT, Agnes, 53225 Bonn (DE); KOPIEC, Christian, 53757 St. Augustin (DE); TREUDT, Volker, 51570 Windeck (DE)
(74) Representative: Kierdorf Ritschel
(86) International application number: PCT/EP2012/001943
(87) International publication number: WO 2013/000525

(56) References cited:
- EP-A1- 2 453 115
- DE-A1-102009 029 400
- JP-A- 2008 291 678

## Description

The invention relates to a liquid reservoir for a motor vehicle, in particular a liquid reservoir for urea solutions having at least one discharge line, which is embodied as an intake line, and which communicates with the reservoir volume via at least one filter element.

In diesel vehicles the prior art involves reducing nitrogen oxide emissions through selective catalytic reduction by means of ammonia. The ammonia needed for the reduction is injected into the exhaust tract in the form of an aqueous urea solution. From the aqueous urea solution, ammonia and CO₂ are produced through a hydrolytic reaction. The ammonia reacts with the nitrogen oxides in the exhaust gas. Here, the quantity of urea injected varies as a function of the nitrogen oxide emissions of the engine and therefore the instantaneous speed and torque of the engine. The efficiency of the catalytic converter is dependent upon an injection of the aqueous urea solution in correct proportion to the nitrogen oxides contained in the exhaust gas.

It is basically necessary and advisable to ensure that the delivery of urea solution from the liquid reservoir to the SCR catalytic converter is as precise as possible in any operating state of the motor vehicle. Since the overall quantity of urea injected into the exhaust tract is relatively small, a dosing accuracy in the order of a few millilitres is desirable.

In normal operating states of the motor vehicle, ensuring such a dosing accuracy presents relatively few problems. Depending on the vehicle dynamics or tilt/inclination of the vehicle and the liquid reservoir in the fitted position, it may be that for a short time an intake line or a filter element provided on the intake line is briefly not in the liquid and that consequently air is aspirated via this intake line. This would mean that for a brief period the system does not dose any urea solution.

This can be countered by drawing urea solution from various points in the liquid reservoir, so that even when tilted or under extreme acceleration/deceleration conditions at least one intake line and one filter element is situated in the liquid. Depending on the position and number of the intake lines it is also possible overall to minimize the residual quantity that cannot be extracted from the liquid reservoir.

Finally it is possible to provide fittings in the liquid reservoir, which in the manner of a surge vessel in a fuel tank limit the capacity of the liquid to move about in the reservoir and thus form an intermediate accumulator inside the liquid reservoir.

Such measures may not be altogether sufficient to ensure an uninterrupted dosing of the liquid.

DE 10 2009 029400 A1 describes a liquid reservoir for a motor vehicle having a discharge line which is embodied as an intake line and which communicates with the reservoir volume via a filter element.

EP 2 453 115 A1 describes a liquid reservoir, in particular for an aqueous urea solution comprising an intermediate storage basin arranged, in the installation position, on the floor of the liquid reservoir.

The object of the invention is to provide a liquid reservoir, in which by the simplest possible measures a precise and continuous delivery of liquid is ensured in all operating states and positions of the vehicle, and that above all such delivery can be ensured by particularly simple design measures.

This object is achieved by a liquid reservoir for a motor vehicle, in particular a liquid reservoir for urea solution having at least one discharge line, which is embodied as an intake line and which communicates via at least one filter element with the reservoir volume, the filter element comprising at least one filter fabric and/or a non-woven filter material, which when wetted prevents an aspiration of air, and the filter element comprising a filter housing, which defines an accumulator volume, which can be at least partially drained when the reservoir volume is empty.

The invention may be summarized by saying that the filter itself acts to equalize the volume, in such a way that if the filter element is temporarily not surrounded by liquid, the volume of liquid present in the filter element is used as accumulator, so as to prevent an interruption to the dosing capability of the system. In this way a liquid reservoir according to the invention can be designed with relatively few extraction points/intake lines. Additional measures, such as the arrangement of an intermediate accumulator vessel inside the liquid reservoir can, if necessary, be eliminated.

Furthermore,the filter housing of the liquid reservoir according to the invention comprises a compressible volume as accumulator volume. The accumulator volume here is designed so that a volume-equalizing discharge can occur, so that the breakthrough pressure of the filter is not exceeded.

The filter fabric or the non-woven filter material of the filter element is suitably designed with a mesh size such that when wetted this prevents the aspiration of air up to a breakthrough pressure of at least 25 mbar. As a rule the breakthrough pressure will be between 50 and 100 mbar. That is to say the viscosity of the urea solution and the mesh size of the filter fabric or the non-woven filter material are such that, when the non-woven filter material or the filter fabric is wetted, it is necessary for a pressure differential of more than 50 mbar to build up in order to cause a breakthrough and an aspiration of air.

The accumulator volume is suitably already compressible from a suction pressure of ≥ -25 mbar.

The liquid contained in the accumulator volume can be discharged until a predefined breakthrough pressure of the filter fabric and/or of the non-woven filter material is attained.

In an especially simple and expedient development of the liquid reservoir according to the invention, the filter housing is collapsible. In that case the filter housing itself is designed as accumulator volume. If the filter element is briefly not immersed in liquid, the negative pressure building up against the wetted filter fabric or the non-woven filter material causes the filter housing to collapse, in such a way that the volume contained therein is briefly released, equalizing the volume.

In a suitable development of the liquid reservoir the filter housing is composed of a pliable and/or elastic material. This may consist of a rubber-elastic material, for example.

Alternatively the filter housing may be embodied as a bellows, for example as a corrugated bellows.

According to another alternative development of the liquid reservoir according to the invention, a porous, spongy accumulator structure is formed as the compressible accumulator volume.

A reticulated foam body, for example, may be provided as compressible accumulator volume.

In an especially advantageous and appropriate development of the liquid reservoir according to the invention, the shell surfaces of the foam body, with the exception of the liquid inlet aperture, are not reticulated, the shell surfaces of the foam body forming the peripheral walls of the filter housing.

In such a variant of the liquid reservoir according to the invention, a non-woven filter material or a filter fabric may be embedded in the foam body in the area of the liquid inlet aperture. A carrier plate may be inserted into the foam body for arranging the non-woven filter material or filter fabric.

The object of the invention is further achieved by a filter element for a liquid reservoir for urea solutions, the filter element comprising a filter housing, which defines a compressible accumulator volume. On such a filter element the features described above may each be realized individually or in combination.

The invention is explained below with reference to an exemplary embodiment represented in the drawings, in which:
- Fig. 1: shows a sectional view through a liquid reservoir according to the invention,
- Fig. 2: shows an enlarged detail view of a filter element according to the invention,
- Fig. 3: shows a view of the filter element represented in Fig. 2 from below,
- Fig. 4: shows a second embodiment of the filter element of the invention,
- Figs. 5 and 6: show various views of a further variant of the filter element according to the invention in various operating states of the motor vehicle and in various positions of the liquid reservoir,
- Figs. 7 and 8: show another alternative development of the filter element according to the invention, and
- Figs. 9 and 10: show a fourth variant of the filter element according to the invention.

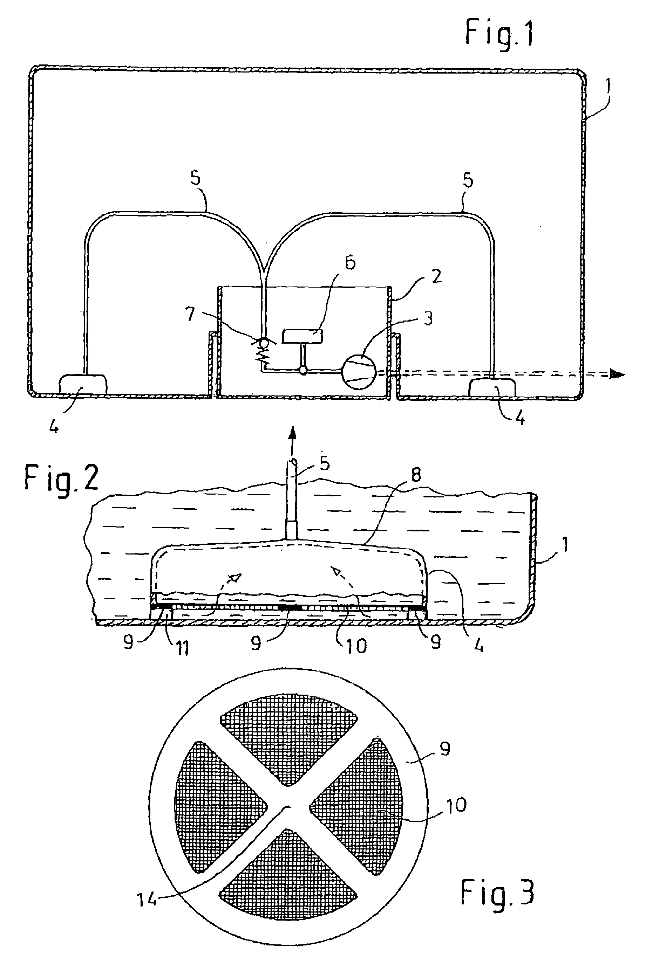

Fig. 1 shows a sectional view of a liquid reservoir 1 according to the invention. This is embodied as a urea reservoir for an aqueous urea solution for the catalytic denitrification of exhaust gas from diesel vehicles. The liquid reservoir 1 is embodied as a reservoir composed of thermoplastic material. This comprises an intermediate accumulator 2, which in the fitted position is arranged at the base of the liquid reservoir 1, a liquid delivery unit 3 arranged inside the intermediate accumulator 2, and two first filter elements 4, which in the fitted position are arranged at the base outside the intermediate accumulator 2.

It should be noted at this point that the intermediate accumulator 2 according to the exemplary embodiment described is not absolutely essential. The number of filter elements 4 in the exemplary embodiment described is two, for example; however, the number of filter elements 4 in general and the number of first filter elements 4 in particular is not critical for the invention.

The first filter elements 4 are designed so that the filter fabric or non-woven filter material of the first filter elements 4 is permeable to the liquid present in the liquid reservoir 1 and possibly impermeable to air when these are wetted. As already mentioned above, this depends on the pressure differential acting on the filter fabric or non-woven filter material. That pressure which is required in order to bring about a breakthrough of the filter fabric or non-woven filter material, that is to say an aspiration of air, is generally referred to as the breakthrough pressure. This necessary pressure differential may be between 50 and 100 mbar.

Also arranged between the inside of the intermediate accumulator 2 and the liquid delivery unit 3 is a second filter element 6, which is designed so that the filter fabric/non-woven filter material of the second filter element 6 is permeable to the liquid present in the liquid reservoir and impermeable to air. The breakthrough pressure of the second filter element 6, at which air is delivered through the filter element, may be greater than the breakthrough pressure of the first filter element 4, in order to take account of a fluctuating opening pressure of the valve 7. The liquid reservoir 1 further comprises a valve 7 between the liquid delivery unit 3 and the first filter element 4, the opening pressure of the valve 7 being less than the breakthrough pressure of the second filter element 6.

The opening pressure of the valve 7 may be influenced by the breakthrough pressure of the first filter elements 4, since these are connected in series in the direction of flow. The fact that the opening pressure of the valve 7 is less than the breakthrough pressure of the second filter element 6 implies that the connection in series of the first filter element 4 and the valve 7 has an overall flow resistance which is less than the breakthrough pressure of the second filter element 6.

For example, the second filter element 6 has a breakthrough pressure of 100 mbar, the first filter elements 4 have a breakthrough pressure of 50 mbar, and the valve 7 has an opening pressure of 25 mbar.

A liquid reservoir 1 designed in this way ensures that the liquid from the intermediate accumulator 2 is delivered by means of the liquid delivery unit 3. When the liquid reservoir 2 no longer contains any liquid, the valve 7 opens before a breakthrough of the second filter element 6 and the liquid from various lines at the base of the liquid reservoir 1 is drained off via the first filter elements 4 and the liquid lines 5, until the reservoir is completely drained.

For attaining the breakthrough pressure of the second filter element 6, this may comprise at least two filter fabrics/non-woven filter materials arranged in series in the delivery direction. The intermediate accumulator 2, which is embodied as a surge vessel in order to restrict a movement of the liquid during a movement of the liquid reservoir 1, and to ensure that the second filter element 6 is surrounded by liquid for as long as possible, further comprises a heating element, in order to heat the liquid present in the intermediate accumulator 2 or to melt this following any freezing.

In contrast to the schematic representation in the drawing, the second filter element 6 may be arranged at the base of the intermediate accumulator 2, in order to ensure the fullest possible residual draining of the intermediate accumulator 2.

In order still to ensure an uninterrupted dosing of urea solution even when the intermediate accumulator 2 is completely drained and even in extreme inclined positions of the motor vehicle and extreme inclined positions of the liquid reservoir 1, at least for a brief period, it is proposed according to the invention that at least the first filter elements 4 should define an at least partially drainable accumulator volume.

A section through a first filter element 4 according to a first exemplary embodiment of the invention is represented, for example, in Fig. 2. The filter element 4, which is connected to the orifice end of the liquid line 5, comprises a filter housing 8, a filter fabric carrier 9, a filter fabric 10 accommodated by the filter fabric carrier 9, and foot elements 11.

For the sake of simplicity, the term "filter fabric" is hereinafter used synonymously for a filter fabric or a non-woven filter material, which are used equivalently in terms of the function according to the invention.

In the exemplary embodiment represented in Figs. 2 to 5, the filter housing 8 is embodied as a thin-walled housing composed of a flexible, rubber-elastic material. The filter housing 8, for instance, has a bell-shaped design and is open towards the base of the liquid reservoir (in respect of the fitted position). A filter fabric carrier 9 with the filter fabric 10 is inserted into the aperture. This side of the filter housing 8 defines the intake side. The filter fabric carrier 9 further comprises a cross support 14, which under pressure differentials lends the corresponding stability to the filter fabric 10.

In order that the filter fabric 10 does not bear against the wall of the liquid reservoir 1, foot elements 11, which keep the filter fabric 10 at an interval from the reservoir walls, are provided on the filter housing 8 on the base side.

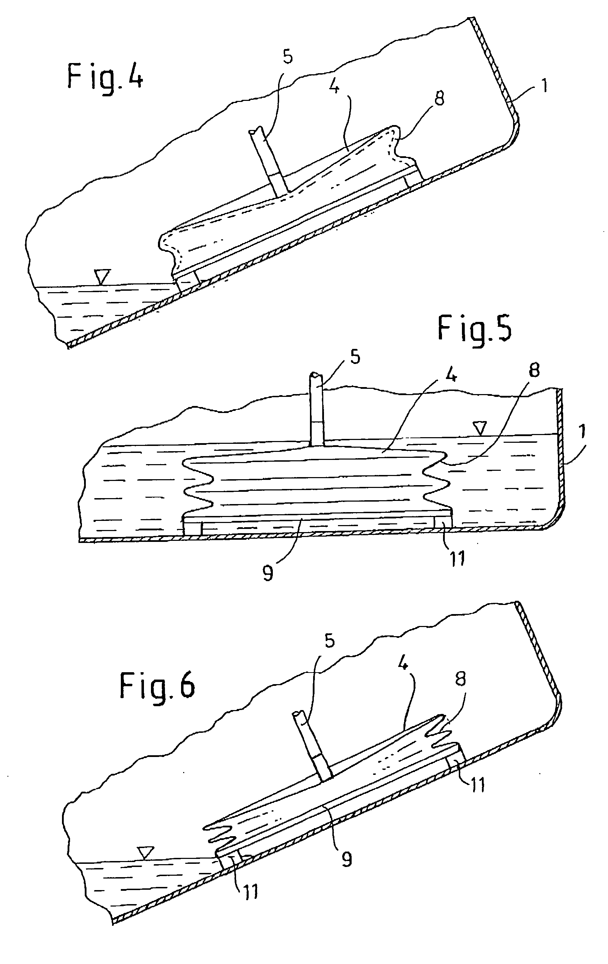

If the level of liquid inside the liquid reservoir 1 now falls below the filter fabric 10, the filter fabric 10 is at first nevertheless still wetted by the urea solution contained in the liquid reservoir 1. Owing to the surface tension and the viscosity of the urea solution, a certain pressure differential is necessary in order to ensure a breakthrough of the liquid through the filter fabric 2 and a draught of air. The filter housing 8 on the one hand defines a certain accumulator volume; on the other hand its flexibility is designed so that in the event of a negative pressure, or a pressure differential in the order of magnitude required for the breakthrough of the filter fabric 10, the filter housing collapses or is compressible, as is represented in Fig. 4, for example. In this case the volume of liquid contained in the filter housing 8 is delivered via the liquid line 5 or discharged from the filter housing 8 into the liquid line 5.

The quantity of liquid stored in the filter housing 8 is sufficient in specific vehicle states or under specific lateral tilting of the vehicle to compensate for dosing failures that might otherwise occur, and to prevent an interruption of the dosing capability.

The filter housing 8 here is advantageously designed so that it is resiliently pliable, that is to say it stores recovery forces, which cause the filter housing 8 to return to the original position as soon as pressures have been equalized.

In the variant of the filter housing 8 represented in Figs. 2 to 4 this housing is itself embodied as a rubber-elastic bell in the manner of a suction bell. In the variant of the filter housing 8 shown in Figs. 5 and 6 this housing is embodied as a corrugated bellows. This does not preclude the filter housing 8 additionally being formed from a rubber-elastic material having a capacity for storing recovery forces inherent in the material.

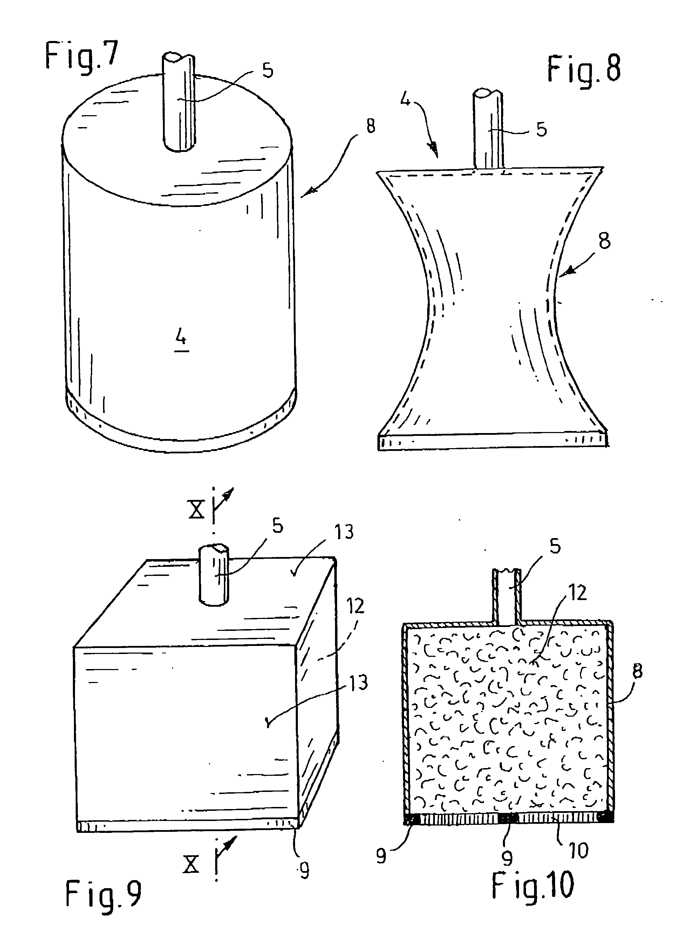

In the variant of the filter element 4 according to the invention shown in Figs. 7 and 8 the filter housing 8 has an elastic buckling structure. This may have a cylindrical shape, for example, with a relatively rigid end plate. A connection nipple for receiving the liquid line 5 may be formed onto the end plate. The wall of the filter housing 8, which forms the cylindrical shell surface of the filter housing 8, may be formed from an elastomer or a thermoplastic elastomer, for example. The filter fabric carrier 9, which in each of the exemplary embodiments described may be composed of thermoplastic material, may have been welded or wedged to the peripheral walls of the filter housing 8, or otherwise connected thereto by cohesive material joining and/or positively interlocking connection.

A further variant of the first filter element 4 according to the invention is represented in Fig. 9, for example. In this case the filter housing 8 is formed by a partially reticulated foam body 12. This is a foam body 12 which is composed of a chemically or physically aftertreated foam material, the aim of the aftertreatment being to obtain an open-pored foam body 12. With the exception of the side facing the filter fabric carriers 9, the shell surfaces 13 of the foam body 12 are not reticulated, so that with the exception of the side forming the intake orifice the peripheral walls of the filter housing 8 are impermeable to gas and liquid. The foam body 12 of the filter element 4 forms an accumulator volume, which is compressible when subjected to a corresponding negative pressure and therefore delivers the liquid contained therein into the liquid line 5.

In any case the filter housing 8 and the connection nipple (not shown) provided on this for the liquid line 9 may have been manufactured from plastic by injection moulding.

The filter fabric 10 may have a mesh size of 15 µm, for example.

In principle the second filter element 6 may also be designed in the manner previously described.

### Reference numerals

- 1: liquid reservoir
- 2: intermediate accumulator
- 3: liquid delivery unit
- 4: first filter element
- 5: liquid line
- 6: second filter element
- 7: valve
- 8: filter housing
- 9: filter fabric carrier
- 10: filter fabric
- 11: foot elements
- 12: foam body
- 13: shell surfaces
- 14: cross support

## Claims

1. Liquid reservoir (1) for a motor vehicle, in particular a liquid reservoir for urea solution having at least one discharge line, which is embodied as an intake line, and which communicates with the reservoir volume via at least one filter element (4, 6), the filter element (4, 6) comprising at least one filter fabric (10) and/or a non-woven filter material, which when wetted prevents an aspiration of air, the filter element (4, 6) comprising a filter housing (8), which defines an accumulator volume, which can be at least partially drained when the reservoir volume is empty,
**characterized in that**
the filter housing (8) comprises a compressible volume as accumulator volume.

2. Liquid reservoir according to Claim 1, **characterized in that** the accumulator volume is compressible at a suction pressure of ≥ -25 mbar.

3. Liquid reservoir according to one of Claims 1 to 2, **characterized in that** the liquid contained in the accumulator volume can be discharged until a predefined breakthrough pressure of the filter fabric (10) and/or of the non-woven filter material is attained.

4. Liquid reservoir according to one of Claims 1 to 3, **characterized in that** the filter housing (8) is collapsible.

5. Liquid reservoir according to one of Claims 1 to 4, **characterized in that** the filter housing (8) is composed of a pliable and/or elastic material, which has resiliently elastic characteristics.

6. Liquid reservoir according to one of Claims 1 to 4, **characterized in that** the filter housing (8) is embodied as a bellows.

7. Liquid reservoir according to one of Claims 1 to 4, **characterized in that** the filter housing (8) is embodied as a corrugated bellows.

8. Liquid reservoir according to one of Claims 1 to 4, **characterized in that** a porous, spongy accumulator structure is provided as compressible accumulator volume.

9. Liquid reservoir according to Claim 8, **characterized in that** an at least partially reticulated foam body (12) is provided as compressible accumulator volume.

10. Liquid reservoir according to Claim 9, **characterized in that**, with the exception of the liquid inlet aperture, the shell surfaces (13) of the foam body are not reticulated, the shell surfaces (13) of the foam body (12) forming peripheral walls of the filter housing (8).

11. Filter element for a liquid reservoir according to one of Claims 1 to 10, having a filter housing, which is embodied as a compressible and spontaneously recovering accumulator volume.

## Patentansprüche

1. Flüssigkeitsbehälter (1) für ein Kfz, insbesondere Flüssigkeitsbehälter für Harnstofflösung mit wenigstens einer Entnahmeleitung, die als Ansaugleitung ausgebildet ist und die über wenigstens ein Filterelement (4, 6) mit dem Behältervolumen kommuniziert, wobei das Filterelement (4, 6) wenigstens ein Filtergewebe (10) und/oder ein Filtervlies umfasst, welches benetzt ein Ansaugen von Luft verhindert, wobei das Filterelement (4, 6) ein Filtergehäuse (8) umfasst, welches ein Speichervolumen definiert, das bei leerem Behältervolumen zumindest teilweise entleerbar ist,
**dadurch gekennzeichnet, dass**
das Filtergehäuse (8) ein komprimierbares Volumen als Speichervolumen umfasst.

2. Flüssigkeitsbehälter nach Anspruch 1, **dadurch gekennzeichnet, dass** das Speichervolumen bei einem Saugdruck von ≥ -25 mbar komprimierbar ist.

3. Flüssigkeitsbehälter nach einem der Ansprüche 1 bis 2, **dadurch gekennzeichnet, dass** die in dem Speichervolumen enthaltene Flüssigkeit bis zum Erreichen eines vorgegebenen Durchbrechdrucks des Filtergewebes (10) und/oder des Filtervlieses entnehmbar ist.

4. Flüssigkeitsbehälter nach einem der Ansprüche 1 bis 3, **dadurch gekennzeichnet, dass** das Filtergehäuse (8) kollabierbar ist.

5. Flüssigkeitsbehälter nach einem der Ansprüche 1 bis 4, **dadurch gekennzeichnet, dass** das Filtergehäuse (8) aus einem nachgiebigen und/oder elastischen Material besteht, welches federelastische Eigenschaften hat.

6. Flüssigkeitsbehälter nach einem der Ansprüche 1 bis 4, **dadurch gekennzeichnet, dass** das Filtergehäuse (8) als Balg ausgebildet ist.

7. Flüssigkeitsbehälter nach einem der Ansprüche 1 bis 4, **dadurch gekennzeichnet, dass** das Filtergehäuse (8) als Faltenbalg ausgebildet ist.

8. Flüssigkeitsbehälter nach einem der Ansprüche 1 bis 4, **dadurch gekennzeichnet, dass** als komprimierbare Speichervolumen eine poröse, schwammartige Speicherstruktur vorgesehen ist.

9. Flüssigkeitsbehälter nach Anspruch 8, **dadurch gekennzeichnet, dass** als komprimierbares Speichervolumen ein wenigstens teilweise retikulierter Schaumkörper (12) vorgesehen ist.

10. Flüssigkeitsbehälter nach Anspruch 9, dadurch gekenntzeichnet, dass die Mantelflächen (13) des Schaumkörpers (12) mit Ausnahme einer Flüssigkeitseintrittsöffnung nicht retikuliert sind, wobei die Mantelflächen (13) des Schaumkörpers (12) Umfassungswände des Filtergehäuses (8) bilden.

11. Filterelement für einen Flüssigkeitsbehälter nach einem der Ansprüche 1 bis 10, mit einem Filtergehäuse, welches als komprimierbares und selbsttätig rückstellendes Speichervolumen ausgebildet ist.

## Revendications

1. Réservoir de liquide (1) pour un véhicule à moteur, en particulier un réservoir de liquide pour une solution d'urée ayant au moins une conduite de décharge, qui est mise en oeuvre sous la forme d'une conduite d'admission, et qui communique avec le volume de réservoir via au moins un élément de filtre (4, 6), l'élément de filtre (4, 6) comprenant au moins un tissu filtrant (10) et/ou un matériau filtrant non tissé qui, lorsqu'il est mouillé, empêche une aspiration de l'air, l'élément de filtre (4, 6) comprenant un boîtier de filtre (8) qui définit un volume d'accumulateur, qui peut être au moins partiellement évacué lorsque le volume de réservoir est vide,
**caractérisé en ce que** :
le boîtier de filtre (8) comprend un volume compressible en tant que volume d'accumulateur.

2. Réservoir de liquide selon la revendication 1, **caractérisé en ce que** le volume d'accumulateur est compressible à une pression d'aspiration de ≥ -25 mbar.

3. Réservoir de liquide selon l'une des revendications 1 à 2, **caractérisé en ce que** le liquide contenu dans le volume d'accumulateur peut être déchargé jusqu'à ce qu'une pression de crevaison prédéfinie du tissu filtrant (10) et/ou du matériau filtrant non tissé soit atteinte.

4. Réservoir de liquide selon l'une des revendications 1 à 3, **caractérisé en ce que** le boîtier de filtre (8) est repliable.

5. Réservoir de liquide selon l'une des revendications 1 à 4, **caractérisé en ce que** le boîtier de filtre (8) est composé d'un matériau pliable et/ou élastique, qui a des caractéristiques élastiques.

6. Réservoir de liquide selon l'une des revendications 1 à 4, **caractérisé en ce que** le boîtier de filtre (8) est mis en oeuvre sous la forme d'un soufflet.

7. Réservoir de liquide selon l'une des revendications 1 à 4, **caractérisé en ce que** le boîtier de filtre (8) est mis en oeuvre sous la forme d'un soufflet ondulé.

8. Réservoir de liquide selon l'une des revendications 1 à 4, **caractérisé en ce qu'**une structure d'accumulateur poreuse, spongieuse, est prévu en tant que volume d'accumulateur compressible.

9. Réservoir de liquide selon la revendication 8, **caractérisé en ce qu'**un corps de mousse au moins partiellement réticulé (12) est prévu en tant que volume d'accumulateur compressible.

10. Réservoir de liquide selon la revendication 9, **caractérisé en ce que**, à l'exception de l'ouverture d'entrée de liquide, les surfaces de coque (13) du corps en mousse ne sont pas réticulées, les surfaces de coque (13) du corps en mousse (12) formant des parois périphériques du boîtier de filtre (8).

11. Elément de filtre pour un réservoir de liquide selon l'une des revendications 1 à 10, ayant un boîtier de filtre qui est mis en oeuvre sous la forme d'un volume d'accumulateur compressible et à recouvrement spontané.
